(19) Europäisches Patentamt
European Patent Office
Office européen des brevets

(11) **EP 2 952 991 A1**

(12) **EUROPÄISCHE PATENTANMELDUNG**

(43) Veröffentlichungstag:
**09.12.2015 Patentblatt 2015/50**

(51) Int Cl.:
***G05B 19/416*** (2006.01)    ***B25J 9/16*** (2006.01)

(21) Anmeldenummer: **14170881.8**

(22) Anmeldetag: **03.06.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
- **Hamm, Carsten**
 **91058 Erlangen (DE)**
- **Ladra, Uwe**
 **91056 Erlangen (DE)**
- **Schäfers, Elmar**
 **90763 Fürth (DE)**

Bemerkungen:
Geänderte Patentansprüche gemäss Regel 137(2) EPÜ.

(54) **Verfahren zum verlustminimalen Bewegen zweier Achsen mittels einem Beschleunigungsprofils**

(57) Der Bewegungsverlauf eines mehrachsigen Systems soll energetisch optimiert werden. Dazu wird ein Verfahren vorgeschlagen, bei dem eine erste Achse und verknüpft damit eine zweite Achse mit einer jeweiligen ersten und zweiten Bewegung bewegt wird. Beide Bewegungen beginnen gemeinsam zu einem ersten Zeitpunkt und enden gemeinsam bei einem zweiten Zeitpunkt. Es wird eine Zeitspanne zwischen dem ersten und dem zweiten Zeitpunkt festgelegt. Ein jeweiliges Beschleunigungsprofil (12, 13) einer oder beider Bewegungen wird so optimiert, dass er innerhalb der Zeitspanne mindestens einen kontinuierlichen Übergang von einem Beschleunigungswert zu einem anderen Beschleunigungswert besitzt.

FIG 2

EP 2 952 991 A1

**Beschreibung**

Die vorliegende Erfindung betrifft ein Verfahren zum Betrieb eines technischen Systems, das mindestens eine erste und eine zweite, jeweils steuerbare oder regelbare Achse aufweist, durch Ausführen einer ersten Bewegung durch die erste Achse, Ausführen einer mit der ersten Bewegung verknüpften zweiten Bewegung durch die zweite Achse, wobei die erste Bewegung und die zweite Bewegung beide zu einem gemeinsamen ersten Zeitpunkt beginnen und zu einem gemeinsamen zweiten Zeitpunkt enden, und Festlegen einer Zeitspanne zwischen dem ersten und dem zweiten Zeitpunkt. Darüber hinaus betrifft die vorliegende Erfindung ein entsprechendes technisches System.

Unter einem technischen System versteht man hier insbesondere eine Be- oder Verarbeitungsmaschine wie Fräsmaschine, Roboter, Positioniermaschine oder dergleichen. Bei solchen technischen Systemen gibt es viele Anwendungen, bei denen in möglichst kurzer Zeit Positionen anzufahren sind. Im Dauerbetrieb kommt der jeweilige Motor dabei oft an seine thermische Grenze.

Solche zyklischen Positionieranwendungen, bei denen in der Regel möglichst hohe Hubzeiten zu erreichen sind, kommen z. B. bei Webmaschinen (Greiferantrieb zum Durchfahren des Webfachs) im Textilbereich, bei Pick- and Place-Anwendungen in verschiedenen Bereichen, bei unterschiedlichen Vorgängen in der Verpackungsindustrie oder auch beim Werkzeugwechsel von Werkzeugmaschinen vor.

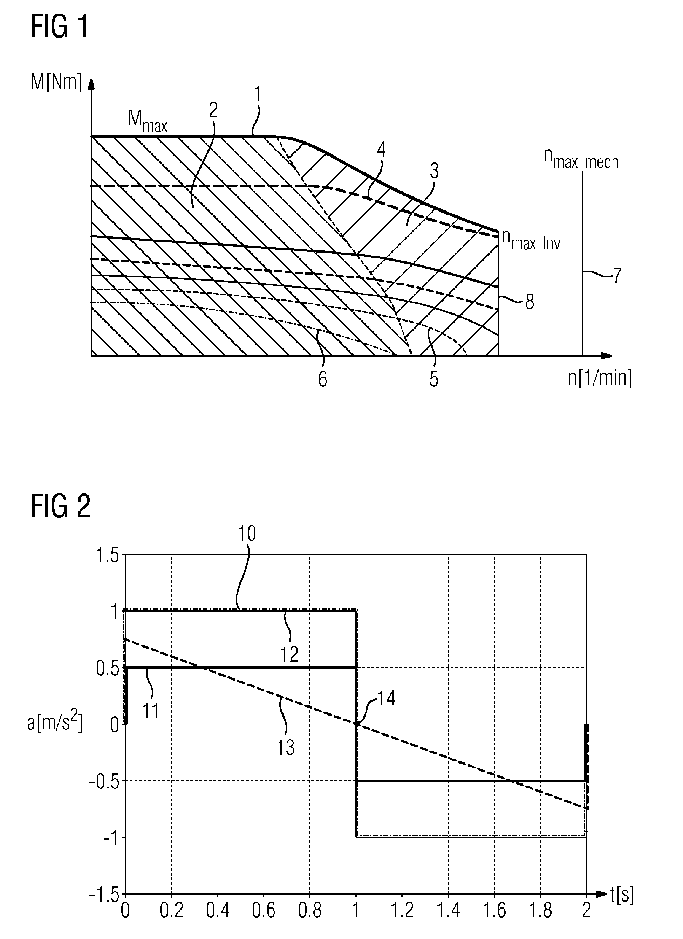

Für eine hohe Produktivität ist bei diesen zyklischen Positioniervorgängen eine hohe Hubzahl erwünscht. Der Motor wird deshalb meist an einer so genannten S1-Kennlinie betrieben, die eine thermische Grenze darstellt. Eine diesbezüglich typische Drehmomentencharakteristik (Drehmoment M über Drehzahl n) für Synchronmotoren ist in FIG 1 dargestellt. Für verschiedene Wärmeklassen ergeben sich bei kontinuierlichem Betrieb entsprechend maximal zulässige Drehmomente. Eine erste Kennlinie 1 deutet das maximal mögliche Drehmoment $M_{max}$ des Synchronmotors an. In einem unteren Kennlinienbereich 2 wird die Synchronmaschine ohne Feldschwächung betrieben, während sie in einem höheren Kennlinienbereich 3 mit Feldschwächung läuft. Eine zweite Kennlinie 4 verläuft unterhalb der Kennlinie 1 und deutet das Maximalmoment $M_{max\ Inv}$ dar, welches durch die bauliche Begrenzung eines Inverters bzw. Stromrichters gegeben ist. Eine weitere Kennlinie 5 verläuft deutlich tiefer und kennzeichnet die S1-Kennlinie für die Wärmeklasse "F", bei der der Motor sich bis zu 100 K über die Umgebungstemperatur erhitzen darf. Weiterhin ist in dem Kennlinienfeld eine Kennlinie 6 dargestellt, die eine S1-Kennlinie für Wärmeklasse "A" darstellt, bei der eine Temperaturüberhöhung des Motors von 60 K gegenüber der Umgebung erlaubt ist.

Ferner zeigt das Kennlinienfeld von FIG 1 Drehzahlgrenzen, die im Zusammenhang mit der vorliegenden Erfindung ebenfalls von Bedeutung sein können. Ein Grenzwert 7 zeigt die maximale mechanische Drehzahl $n_{max\ mech}$ des im vorliegenden Beispiel gewählten Synchronmotors. Einen weiteren Drehzahlgrenzwert $n_{max\ Inv}$, der hier durch die Grenzlinie 8 dargestellt ist und unterhalb der Drehzahlgrenzlinie 7 liegt. Die Grenzlinie 8 verdeutlicht eine Drehzahlgrenze, die durch den Inverter bzw. Stromrichter vorgegeben sein kann. Aus dem Kennlinienfeld wird deutlich, dass das Drehmoment eines Motors durch mehrere Eigen- oder Umfeldbedingungen begrenzt sein kann.

Der Motor im Beispiel von FIG 1 nutzt aufgrund seiner beschränkten thermischen Belastbarkeit bei Bewegungen, bei denen Beschleunigungsvorgänge dominant sind (wenig Stillstand, wenig Fahrt mit konstanter Geschwindigkeit), nur ein Maximalmoment im Bereich des Stillstandsdauerdrehmoments beispielsweise der Kennlinie 5 oder 6. Offensichtlich steht jedoch mit dem maximalen Motormoment $M_{max}$ entsprechend Kennlinie 1 ein wesentlich größeres Drehmoment zur Verfügung, das bei solchen Anwendungen heute nicht genutzt wird.

Da der Motor schon an seiner thermischen Grenze betrieben wird, ist die geforderte Erhöhung der Hubzahl mit den heute gebräuchlichen Verfahrprofilen nicht möglich. Die Wärmeentwicklung im Motor kann im Wesentlichen durch zwei Ursachen beschrieben werden. Einerseits können die Kupferverluste im Motor nach folgender Gleichung berechnet werden:

$$P_{CU}(M) = 3 \cdot \left(1 + 0,004 / K \cdot \Delta\vartheta_{wk}\right) \cdot R_{20}\left(\frac{M}{k_1}\right)^2$$

Zum anderen werden die Eisenverluste wie folgt beschrieben:

$$P_{FE}(n) = 3 \cdot \left(1 + 0{,}004 / K \cdot \Delta \vartheta_{wk}\right) \cdot R_{20}\left(I_0^2 - I_N^2\right) \cdot \left(\frac{n}{n_N}\right)^2$$

Die Motorparameter sind dabei folgendermaßen definiert:

| | |
|---|---|
| $I_{0\ 100K}$ [A] ... | Stillstandstrom (100K) |
| $I_{N\ 100K}$ [A] ... | Nennstrom (100K) |
| $n_N$ [U/min] ... | Nenndrehzahl |
| $k_t$ [Nm/A] ... | Drehmomentkonstante (als Kennlinie!) |
| $R_{20}$ [Ω] ... | Wicklungswiderstand bei 20°C |
| $\Delta \vartheta_{wk}$ [K] ... | zulässige Übertemperatur der Wärmeklasse $\Delta \vartheta_{wk}$ = 100 K für Wärmeklasse "F" $\Delta \vartheta_{wk}$ = 80 K für Wärmeklasse "B" |

Die heute verwendeten Verfahrprofile mit sprungförmiger Beschleunigung ("brisk") bzw. bei Ruckbegrenzung mit trapezförmigem Beschleunigungsverlauf ("soft") sind aus energetischen Betrachtungen weniger geeignet. Wesentlich besser für solche Anwendungen wäre ein Verfahrprofil, welches die Verluste im Motor berücksichtigt.

Mit der siemenseigenen Patentanmeldung 201314337 "Steuerungsfunktionalität für verlustminimale Bewegungsprofile für Be- und Verarbeitungsmaschinen" wurde bereits ein verlustminimales Verfahren für eindimensionale Positioniervorgänge beschrieben, wobei die thermischen Verluste des Motors minimiert werden. Hierbei wurde nur eine einzige Achse betrachtet, die aufgrund der zyklischen Verfahrvorgänge thermisch an ihrer Grenze ist. Mit dieser Vorgehensweise lassen sich höhere Hubzahlen (Produktivitätssteigerung) erzielen oder die thermischen Verluste minimieren, was zur Energieeffizienz der Antriebssysteme beiträgt.

Die Problematik der Motorerwärmung wurde bisher steuerungsseitig nicht weiter betrachtet. Wenn der Motor zu warm wird, muss die Hubzahl bei zyklischen Anwendungen entsprechend heruntergesetzt werden.

Ein anderer, oft gewählter Weg besteht darin, einen größeren Motor mit mehr Drehmoment einzubauen. Dieser Weg stößt aber oft anhand von Kosten, Bauraum bzw. dann aufgrund des schlechteren Verhältnisses von Drehmoment zu Trägheitsmoment des Motors an seine Grenzen und stellt somit auch keine Lösung dar.

Die Aufgabe der vorliegenden Erfindung besteht somit darin, den Betrieb eines mehrachsigen Systems energetisch zu optimieren.

Erfindungsgemäß wird diese Aufgabe gelöst durch ein Verfahren zum Betrieb eines technischen Systems, das mindestens eine erste und eine zweite, jeweils steuerbare oder regelbare Achse aufweist, durch

- Ausführen einer ersten Bewegung durch die erste Achse,
- Ausführen einer mit der ersten Bewegung verknüpften zweiten Bewegung durch die zweite Achse, wobei
- die erste Bewegung und die zweite Bewegung beide zu einem gemeinsamen ersten Zeitpunkt beginnen und zu einem gemeinsamen zweiten Zeitpunkt enden, und
- Festlegen einer Zeitspanne zwischen dem ersten und dem zweiten Zeitpunkt, wobei
- ein jeweiliges Beschleunigungsprofil der ersten und/oder der zweiten Bewegung innerhalb der Zeitspanne mindestens einen kontinuierlichen Übergang von einem Beschleunigungswert zu einem anderen Beschleunigungswert besitzt.

Darüber hinaus wird erfindungsgemäß bereitgestellt ein technisches System mit

- einer steuerbaren oder regelbaren ersten Achse,
- mindestens einer steuerbaren oder regelbaren zweiten, Achse,
- einer Steuereinrichtung, die zum Ansteuern der ersten Achse für ein Ausführen einer ersten Bewegung und zum Ansteuern der zweiten Achse für ein Ausführen einer mit der ersten Bewegung verknüpften zweiten Bewegung ausgebildet ist, wobei
- die erste Bewegung und die zweite Bewegung beide zu einem gemeinsamen ersten Zeitpunkt beginnen und zu einem gemeinsamen zweiten Zeitpunkt enden, und
- eine Zeitspanne zwischen dem ersten und dem zweiten Zeitpunkt festgelegt ist, sowie
- in der Steuereinrichtung ein jeweiliges Beschleunigungsprofil für die erste und/oder die zweite Bewegung hinterlegt ist, das innerhalb der Zeitspanne mindestens einen kontinuierlichen Übergang von einem Beschleunigungswert zu einem anderen Beschleunigungswert besitzt.

In vorteilhafter Weise besitzt also bei dem mehrachsigen System mindestens eine Achse zumindest zeitweise ein kontinuierliches, d. h. ein stetiges, Beschleunigungsprofil. Ein kontinuierlicher bzw. stetiger Beschleunigungsverlauf über der Zeit sorgt dafür, dass die Verlustenergie gegenüber einem Sprung im Beschleunigungsprofil reduziert wird. Kontinuierliche Übergänge zwischen Beschleunigungswerten des Beschleunigungsprofils sorgen also für eine Reduktion der Verlustenergie und somit für eine verminderte thermische Erwärmung. In der Folge kann der Motor bzw. das technische System mit höherer Leistung betrieben werden, da die thermischen Grenzwerte nicht so schnell erreicht werden. So können insbesondere bei Positioniervorgängen thermische Verluste minimiert und dementsprechend Bewegungsprofile nach energetischen Gesichtspunkten optimiert werden. Dabei kann die Bewegung aus dem Stillstand oder aus einer von null verschiedenen Geschwindigkeit beginnen. Ebenso kann die Bewegung mit einer Geschwindigkeit gleich null oder einer von null verschiedenen Geschwindigkeit enden.

Das Festlegen der Zeitspanne zwischen dem ersten Zeitpunkt und dem zweiten Zeitpunkt für die beiden Bewegungen kann dadurch erfolgen, dass die erste Achse bei der ersten Bewegung zumindest zeitweise eine vorgegebene Maximalgeschwindigkeit erreicht. Durch die Bewegung mit Maximalgeschwindigkeit kann versucht werden, die Bewegungszeit zu reduzieren, was stets ein Ziel bei solchen technischen Systemen ist.

Vorzugsweise wird die Zeitspanne für eine vorgegebene Distanz der ersten Bewegung für die erste Achse minimal gewählt. Dies bedeutet, dass die erste Achse solang wie möglich mit maximaler Geschwindigkeit betrieben wird. Dadurch kann die Distanz zwischen zwei Punkten für eine Positionieraufgabe mit geringstem Zeitaufwand zurückgelegt werden. In dem Mehrachsverbund ergibt sich die minimale Zeitspanne durch die langsamste Achse. Aber gerade dadurch, dass die anderen Achsen schneller sind, ergeben sich für sie Freiheitsgrade, die für die Reduzierung bzw. Minimierung der Verlustenergie genutzt werden können. Innerhalb des zeitlichen Rahmens der langsamsten Achse können also die Beschleunigungsprofile der übrigen Achsen so optimiert werden, dass die Verlustenergie für die jeweilige Achse oder das Gesamtsystem minimiert wird.

Vorzugsweise wird ein Bewegungsprofil der zweiten Achse bezüglich eines Parameters optimiert. Ein solcher Optimierungsparameter wäre die Kontinuität des Beschleunigungsverlaufs z.B. in Richtung eines vollkommen linearen Beschleunigungsverlaufs.

Das jeweilige Beschleunigungsprofil der Achsen kann durch eine vorgegebene positive Maximalbeschleunigung und/oder eine vorgegebene negative Maximalbeschleunigung begrenzt sein. Eine solche Randbedingung einer Maximalbeschleunigung kann durch mechanische oder thermische Vorgaben für die jeweilige Achse zu berücksichtigen sein. So kann es notwendig sein, die Beschleunigung deshalb zu begrenzen, damit eine thermische Grenze im Dauerbetrieb nicht überschritten wird. Eine Maximalbeschleunigung kann aber auch mechanisch verursacht sein, beispielsweise bei einer Positionieraufgabe, wenn Gegenstände durch Saugnäpfe transportiert werden, die nur eine vorgegebene Kraft aufbringen können.

Darüber hinaus kann das jeweilige Beschleunigungsprofil für einen Zeitabschnitt, der größer als die kleinste zeitliche Auflösung des technischen Systems bei jeder Bewegung der Achsen ist, den Wert null aufweisen. Dies bedeutet, dass während einer längeren Zeitdauer (nicht einfacher Nulldurchgang, der bei digitalen Systemen eine endliche Zeit entsprechend der kleinsten zeitlichen Auflösung dauert) die jeweilige Achse nicht beschleunigt wird, da beispielsweise eine Grenzgeschwindigkeit der Achse erreicht ist. Grenzgeschwindigkeiten sind ebenfalls Randbedingungen, die bei der Gestaltung des Beschleunigungsprofils einzuhalten sind. Solche Grenzgeschwindigkeiten können, wie in dem Beispiel von FIG 1 angedeutet wurde, beispielsweise rein mechanisch bedingt sein oder aber durch die elektrische Ansteuerung gegeben sein.

Das jeweilige Beschleunigungsprofil kann über die gesamte Zeitspanne kontinuierlich verlaufen. Mit einem derart stetigen Beschleunigungsprofil während des gesamten Bewegungsablaufs der beiden Achsen lässt sich gegenüber einem nicht stetigen Beschleunigungsprofil deutlich Verlustenergie einsparen.

Besonders vorteilhaft ist, wenn das jeweilige Beschleunigungsprofil über der gesamten Zeitspanne die gleiche Steigung besitzt. Ein solcher linearer Beschleunigungsverlauf führt zu minimaler Verlustenergie. Dabei sowie bei allen anderen Ausführungsbeispielen kann die Zeitspanne den ersten und/oder den zweiten Zeitpunkt mit beinhalten oder nicht.

Des Weiteren kann das Beschleunigungsprofil der zweiten Achse zu einem Zeitpunkt kontinuierlich verlaufen, an dem das Beschleunigungsprofil der ersten Achse einen Sprung macht. Dies führt dazu, dass die Freiheit zur Gestaltung des Beschleunigungsprofils der zweiten Achse im Hinblick auf eine Verlustenergieminimierung genutzt wurde. Dabei wird ein Konturfehler in Kauf genommen, da sich die Beschleunigungen auf den unterschiedlichen Achsen ja voneinander unterschieden.

Außerdem kann das Beschleunigungsprofil der ersten Achse durch Multiplikation mit einem einzigen Skalar in das Beschleunigungsprofil der zweiten Achse überführbar sein. Dies stellt eine Alternative zu obigen, in der Stetigkeit unterschiedlichen Beschleunigungsprofilen dar. Da die Beschleunigungsprofile der mehreren Achsen also nur unterschiedlich skaliert sind, treten keine Konturfehler auf.

Die oben beschriebenen Verfahrensmerkmale lassen sich auch als funktionelle Merkmale des erfindungsgemäßen technischen Systems und insbesondere der darin enthaltenen Steuereinrichtung nutzen.

Die vorliegende Erfindung wird anhand der beigefügten Zeichnungen näher erläutert, in denen zeigen:

FIG 1    ein Kennlinienfeld eines Synchronmotors unter bestimmten Randbedingungen;
FIG 2    Beschleunigungsprofile für zwei Achsen, wobei die zweite Achse hinsichtlich Verlustenergie optimiert wird;
FIG 3    Beschleunigungsprofile ohne Geschwindigkeitsbegrenzung aber mit thermischer Grenze;
FIG 4    Geschwindigkeitsprofile für lange Wege mit Geschwindigkeitsbegrenzung und thermischer Grenze;
FIG 5    Geschwindigkeitsprofile wie in FIG 4, wobei eine Grenzgeschwindigkeit nicht erreicht wird;
FIG 6    Beschleunigungsprofile für lange Wege mit Geschwindigkeitsbegrenzung und mechanischer Grenze;
FIG 7    Beschleunigungsprofile wie in FIG 6, wobei jedoch eine Grenzgeschwindigkeit nicht erreicht wird;
FIG 8    Beschleunigungsprofile für lange Wege und Achsen mit Geschwindigkeitsbegrenzung, wobei eine Bahnbeschleunigung aber keine Achsbeschleunigungen grenzwertig sind;
FIG 9    Beschleunigungsprofile wie in FIG 8, wobei Grenzgeschwindigkeiten nicht erreicht werden;
FIG 10   ein Beschleunigungsprofiltyp für minimale Verlustenergie;
FIG 11   ein Beschleunigungsprofiltyp mit Beschleunigungsbegrenzung;
FIG 12   ein Beschleunigungsprofiltyp, bei dem eine Maximalgeschwindigkeit erreicht wird und
FIG 13   ein Beschleunigungsprofiltyp mit Beschleunigungsbegrenzung, bei dem ebenfalls eine Maximalgeschwindigkeit erreicht wird.

Die nachfolgend näher geschilderten Ausführungsbeispiele stellen bevorzugte Ausführungsformen der vorliegenden Erfindung dar.

Den Ausführungsbeispielen liegt ein technisches System mit zwei oder mehreren Antriebsachsen zugrunde. Es kann für die eingangs erwähnten Maschinen zur Bearbeitung, Positionierung etc. verwendet werden. Für das Bewegen bzw. "Verfahren" einer Maschine (oder Maschinenkomponente) im Raum, also in mehreren Dimensionen, wirken grundsätzlich mehrere Aktoren/Antriebe zusammen. Je ein Antrieb bedient dabei einen mechanischen Freiheitsgrad, sodass daraus die gewünschte Bewegung als Ganzes resultiert. Eine typische Anforderung an die Ausführung einer mehrdimensionalen Bewegung verlangt, dass die einzelnen Achsen einen Verfahrbefehl gemeinsam beginnen und gemeinsam beenden. Die Achsen fahren also gleichzeitig und nicht sequentiell, weil dies insgesamt zu lange dauern würde. Von den beteiligten Achsen fährt auch nicht jede so schnell wie sie kann und wartet am Ziel auf die anderen, weil dies eine unnötige Belastung bedeuten würde.

Wenn an einer Bewegung n Achsen beteiligt sind, dann fährt im Allgemeinen eine der Achsen an einer ihrer physikalischen Grenzen (Geschwindigkeit, Beschleunigung, Strom, Erwärmung, etc.). n-1 Achsen bewegen sich mit weniger als der zulässigen dynamischen Anstrengung. Die Zeitdauer zum Ausführen eines Bewegungsbefehls wird von der am stärksten beanspruchten Achse bzw. langsamsten Achse bestimmt.

Es wird nun angestrebt, die Bewegungsprofile für mehrdimensionale Bewegungen des Mehrachsverbunds unter energetischen Gesichtspunkten zu optimieren. Hierzu sind folgende Schritte vorgesehen:

a) die zeitbestimmende Achse (langsamste Achse) wird analysiert und - wenn zulässig - auf ein verlustenergieminimales (nachfolgend kurz verlustminimales) Profil umgestellt. Dabei wird vorzugsweise das eingangs erwähnte Verfahren gemäß der Anmeldung 201314337 angewendet.

b) Die nicht zeitbestimmenden Achsen, die also Dynamikreserven haben, fahren nach Möglichkeit Energie minimal oder "synchronskaliert" (jeweils zwei Bewegungsprofile sind durch Multiplikation mit einem einzigen Skalar ineinander überführbar).

Je nach Konstellation ergeben sich dabei die im Zusammenhang mit den FIG 2 bis 9 beschriebenen Fallunterscheidungen. Dabei sind auch folgende Sonderfälle zu berücksichtigen:

a) Konturfehler erlaubt
Konturfehler sind erlaubt, wenn die Bewegung nicht auf einer vorher festgesetzten Bahn erfolgen muss. Dies ist beispielsweise der Fall bei Werkzeugmaschinen zum Werkzeugwechsel oder bei Pick- and Place-Aufgaben. Wird dabei eine kartesische Maschinenkinematik (Achsen für Bewegungen in orthogonale Raumrichtungen) vorausgesetzt, bewegt sich die Maschine (oder das Maschinenelement) bei den oben beschriebenen Bewegungen in etwa auf einer geraden Linie im Raum vom Start zum Ziel. In einer Vielzahl von Anwendungsfällen ist - wie soeben angedeutet - das exakte Einhalten der Geraden nicht erforderlich. Es können Abweichungen bis zu einem gewissen Toleranzmaß in Kauf genommen werden. Für den Fall, dass Konturfehler erlaubt sind, besteht noch größeres Potential für die Energieeinsparung. Für eine nicht-kartesische Maschinenkinematik gilt Entsprechendes.

b) Achsinterpolation insbesondere an CNC-Maschinen Achsinterpolation in diesem Zusammenhang bedeutet hier, dass mehrere Achsen exakt eine aufeinander abgestimmte Bewegungsvorschrift einhalten müssen. Einen derart hohen Anspruch an Steuerungstechnik und Regelungsgüte haben solche Bewegungen, bei denen es auf das kontinuierliche Einhalten einer vorbestimmten Bahn ankommt. Bei 5-achsigen CNC-Bearbeitungen z. B. müssen die kartesische Position des Werkzeugs (drei Achsen) und dessen Orientierung (weitere zwei Achsen) zu jedem Zeitpunkt der vorgegebenen Trajektorie folgen und stets zueinander passen. In den unten gezeigten Fällen, die ohne Konturfehler auskommen, ist sogar eine energetische Optimierung für CNC-geführte Bewegungen erreichbar.

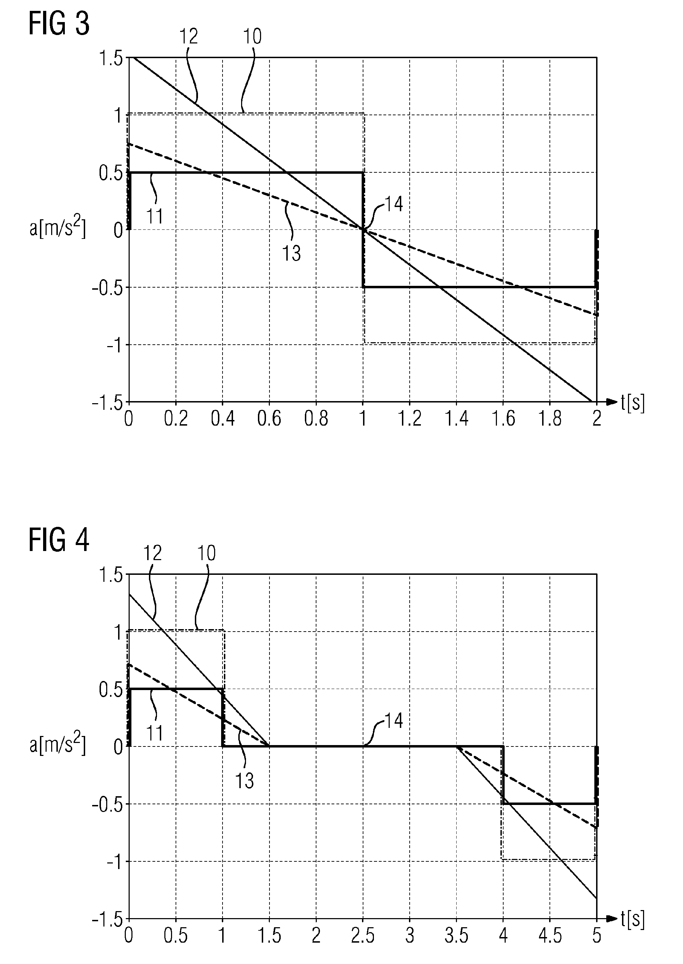

Am Beispiel von zwei Antriebsachsen sollen nun die Möglichkeiten zum verlustenergieminimalen Positionieren im Achsverbund aufgezeigt werden. Prinzipiell ist dieses Vorgehen auf n Achsen übertragbar, wobei n eine natürliche Zahl $\geq 2$ ist. Im Folgenden werden jedoch speziell eine X-Achse und eine Y-Achse betrachtet, die jeweils steuerbar bzw. regelbar sind und die miteinander so synchronisiert sind, dass die Maschine bzw. das Maschinenelement des technischen Systems auf einer Bahn im Raum bewegt wird. Die Bewegung beider Achsen und damit auch der Bahnverlauf starten zu einem ersten Zeitpunkt, der bei den folgenden Beispielen als Null-Zeitpunkt gewählt wurde, und sie enden bei einem gemeinsamen zweiten Zeitpunkt, der beispielhaft bei den FIG 2 und 3 bei 2s und den FIG 4 bis 9 bei 5s gewählt wurde. Die Zeitspanne zum Ausführen der zweiachsigen Bewegung beträgt also 2s bzw. 5s.

In FIG 2 zeigt das Geschwindigkeitsprofil 10 ein klassisches Profil gemäß dem Stand der Technik für die X-Achse (erste Achse) und das Beschleunigungsprofil 11 ein klassisches Profil für die Y-Achse (zweite Achse) zur Realisierung einer geraden Bahn. Die Bahn ist hier so kurz, dass die konstante Beschleunigung der beiden Achsen mit dem gewählten Beschleunigungswert nicht zum Erreichen einer Maximalgeschwindigkeit des Maschinenelements führt. Die Beschleunigung der X-Achse ist hier vielmehr so gewählt, dass die mechanische Grenze $a_{max}$ = 1m/s2 erreicht ist. Die X-Achse wird daher für die vorliegenden Randbedingungen maximal beschleunigt, was für einen vorgegebenen Weg zu einer minimalen Bewegungsdauer führt. Zum Zeitpunkt t = 1s wird die Beschleunigung sprunghaft umgekehrt, so dass a = -1m/s2 ist. Es wird also sprunghaft von einem Beschleunigungswert zu einem anderen Beschleunigungswert übergegangen. Die Bewegung wird hier maximal abgebremst und beim Zeitpunkt t = 2s ist sie zu Ende und die X-Achse steht wieder. Das entsprechende Geschwindigkeitsprofil der X-Achse wäre ein Dreieck mit der Spitze bei t = s. Als Bahnkurve in einem orthogonalen X-Y-System ergäbe sich idealerweise eine Gerade mit einem Winkel $\alpha$ zur X-Achse mit tan ($\alpha$) = 0,5, womit $\alpha$ = 26,6°.

Die Beschleunigung der Y-Achse erreicht hier nicht den mechanischen Grenzwert, und sie ist während der Beschleunigungsphasen an die Beschleunigung der X-Achse angepasst, um die gewünschte Bewegungsbahn zu realisieren. Theoretisch könnte die Y-Achse also auch stärker beschleunigt bzw. abgebremst werden.

Erfindungsgemäß soll nun eine Energieoptimierung bei der Bewegung des Mehrachsverbunds vorgenommen werden. Insbesondere soll hier die Verlustenergie reduziert werden. Da die Verlustenergie prinzipiell dadurch minimiert wird, dass das Beschleunigungsprofil auf einer Geraden durch den Wert a = 0m/s$^2$ liegt, kann versucht werden, beide Beschleunigungsprofile 10 und 11 auf eine solche Gerade zu legen (beide Profile mit kontinuierlichen Übergängen der Beschleunigungswerte; insbesondere streng monoton fallend). Dann wird aber unter Umständen nicht ein weiteres Ziel, nämlich das einer möglichst kurzen Bewegung erreicht. Deshalb ist es bei der Forderung nach einer möglichst kurzen Bewegung notwendig, die vorgegebene Bahn bzw. die Endpunkte einer Bewegung dahingehend zu analysieren, welche der beiden Achsen die langsamere ist und damit für die gewünschte Bewegung am meisten Zeit benötigt. In dem Beispiel von FIG 2 ist die langsamere Achse die X-Achse, weshalb sie im Beispiel bis zur maximalen, mechanischen Grenze gemäß dem Beschleunigungsprofil 10 bis zum Umkehrzeitpunkt t = 1s beschleunigt wird. Von da an wird sie mit dem gleichen Beschleunigungsbetrag abgebremst. Dieses Bewegungs- bzw. Beschleunigungsprofil der X-Achse gibt also die minimale Zeit für die Bewegung vor. Bei einer Optimierung der Bewegung der Maschinenkomponente wird also das Bewegungs- bzw. Beschleunigungsprofil der X-Achse entsprechend dem Beschleunigungsprofil 12 von FIG 2, was dem Beschleunigungsprofil 10 entspricht, beibehalten.

Da hier die Y-Achse für die gewünschte Bewegung theoretisch schneller wäre, kann deren Beschleunigungsprofil im Sinne einer Energieoptimierung variiert werden. Es wird also versucht, das Beschleunigungsprofil der Y-Achse auf eine Gerade durch den Mittelpunkt 14 des Beschleunigungsprofils zu legen, an dem die Beschleunigung umgekehrt wird und an dem gilt: a = 0ms$^2$ und t = 1s. Im vorliegenden Beispiel kann eine solche Gerade gemäß der Patentanmeldung 201314337 auch ohne weiteres gefunden werden. Dies führt zu einer minimalen Verlustenergie für die Y-Achse, sodass entweder die Y-Achse oder das Gesamtsystem entweder mit niedrigerer Energie betrieben werden können, um Energie einzusparen oder mit höherer Leistung betrieben werden, um die Leistungsfähigkeit des technischen Systems zu steigern.

Bei der optimierten Bewegung wird also die X-Achse gemäß dem Profil 12 und die Y-Achse gemäß dem Profil 13 beschleunigt. Diese beiden Beschleunigungsprofile sind nicht durch ein einfaches Skalar mit Multiplikation ineinander überzuführen. Sie sind also nicht "synchron skaliert". Dies aber führt zu einem Konturfehler, was bedeutet, dass das Maschinenelement bzw. die Maschine sich nicht mehr auf einer geraden Bahn, sondern in etwa auf einer S-Kurve zum Ziel bewegt. Ein solcher Konturfehler ist wie oben erwähnt für Pick- and Place-Aufgaben oder Werkzeugwechsel unerheblich, aber beispielsweise für Fräsmaschinen im Eingriff nicht zulässig, da eine fest vorgegebene Bahn nicht eingehalten wird.

In dem Beispiel von FIG 3 sind wiederum die beiden Bezugsprofile 10 und 11 unverändert gegenüber FIG 2 eingezeichnet. In diesem Fall ist die gesamte Bewegungsbahn auch kurz, sodass eine maximale Bahn- bzw. Achsgeschwindigkeit nicht erreicht wird. Es muss also über die zu optimierenden Geschwindigkeitsprofile keine Geschwindigkeitsbegrenzung eingehalten werden, wobei vorausgesetzt ist, dass eine thermische Grenze der Dauerbelastung eine maximale Beschleunigung von 1m/s2 vorgibt. Die mechanische Grenze der Beschleunigung sei hier aber größer und insbesondere größer als 1,5 m/s$^2$.

Die hier thermisch vorgegebene Maximalbeschleunigung der X-Achse gibt wieder die Minimalzeit für die Gesamtbewegung vor. Das optimierte Beschleunigungsprofil 13 der Y-Achse wird hier wie im Beispiel von FIG 2 gebildet. Darüber hinaus ist im vorliegenden Beispiel auch eine Energieoptimierung der X-Achse gemäß dem optimierten Beschleunigungsprofil 12 möglich. Dies liegt daran, dass die thermische Grenze der Belastung bei kurzfristig höherer Beschleunigung nicht überschritten wird und die mechanische Grenze der Beschleunigung noch nicht ausgereizt war. Es lässt sich hier also ebenfalls eine Gerade durch den Punkt 14 finden, die zu einem verlustminimalen Bewegen der X-Achse führt. Die Endpunkte der Beschleunigungsprofile werden bei all diesen Betrachtungen außer Acht gelassen, also die Beschleunigungen zu den Zeitpunkten t = Os und 2s bzw. 5s. Vorteil der Optimierung gemäß FIG 3 ist nicht nur, dass beide Achsbewegungen verlustminimal sind, sondern dass auch kein Konturfehler vorliegt und die beiden Achsen synchron skaliert sind.

In den Beispielen gemäß den folgenden FIG 4 bis 9 liegen nun lange Bewegungswege vor, so dass durch die jeweilige Maximalbeschleunigung, die bei einer Dauerbelastung zulässig wäre, eine zu hohe Geschwindigkeit des Maschinenelements bzw. der Maschine erreicht werden würde, welche ihrerseits nicht zugelassen ist. Die klassischen Beschleunigungsprofile 10 und 11 werden daher beispielhaft in dem Zeitraum zwischen t = 1s und t = 4s auf 0m/s$^2$ gesetzt.

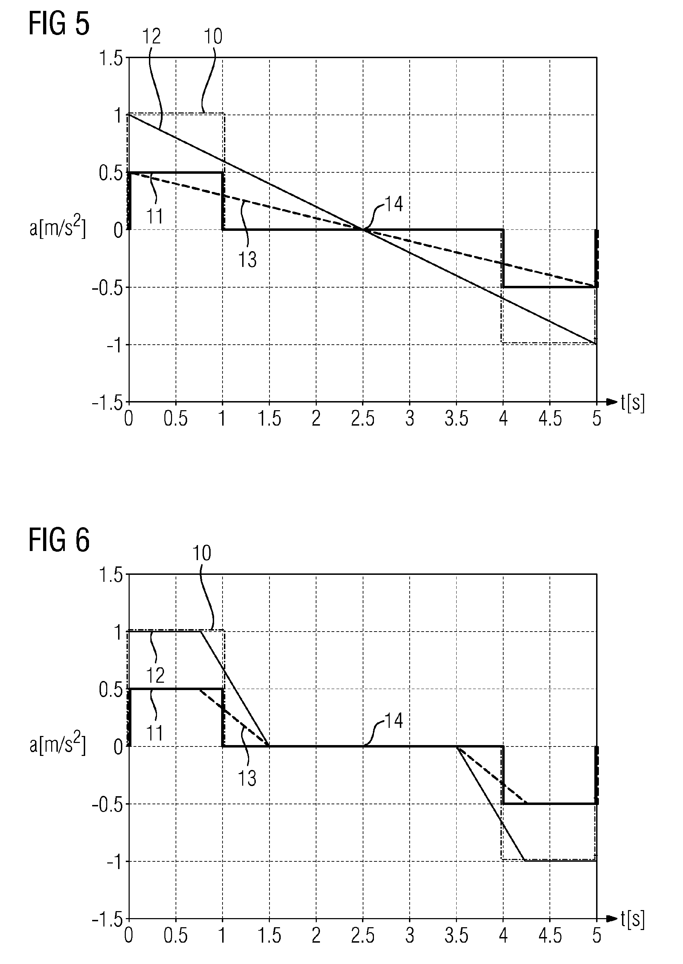

In den beiden Beispielen von FIG 4 und 5 liegt außerdem eine thermische Grenze des Systems bzw. der jeweiligen Achse vor, sodass ein entsprechender Dauerbeschleunigungswert kurzfristig überschritten werden kann. In dem Fall von FIG 4 wird außerdem eine Geschwindigkeitsgrenze bei der Optimierung eingehalten, weshalb auch die optimierten Beschleunigungsprofile 12 und 13 im Mittelbereich den Wert 0m/s$^2$ annehmen. Zur Reduzierung der Verlustenergie beginnt das Beschleunigungsprofil 12 der X-Achse etwa bei einem Wert von 1,3 $_{M/S}$$^2$, was über der thermischen Dauerbelastungsgrenze = 1m/s$^2$ liegt. Die Beschleunigung der X-Achse wird innerhalb von 1,5s auf 0m/s$^2$ linear reduziert, was gegenüber dem Beschleunigungsprofil 10 eine Verlustreduktion bedeutet, da beim Zeitpunkt t = 1s kein Sprung vom Maximalwert auf null vorliegt. In ähnlicher Weise wird zum Zeitpunkt t = 3,5 s der Betrag der negativen Beschleunigung linear auf 1,3 erhöht, was auch hier zu einer Verlustreduktion führt.

Das Profil 13 der Y-Achse wird gegenüber dem Stufenprofil 11 ähnlich optimiert wie Profil 12, wobei der Betrag der Endwerte etwas niedriger liegt. Die beiden Profile 12 und 13 können jedoch durch einen einzigen Skalar ineinander übergeführt werden, sodass kein Konturfehler gegenüber der Bahn mit den Profilen 10 und 11 entsteht.

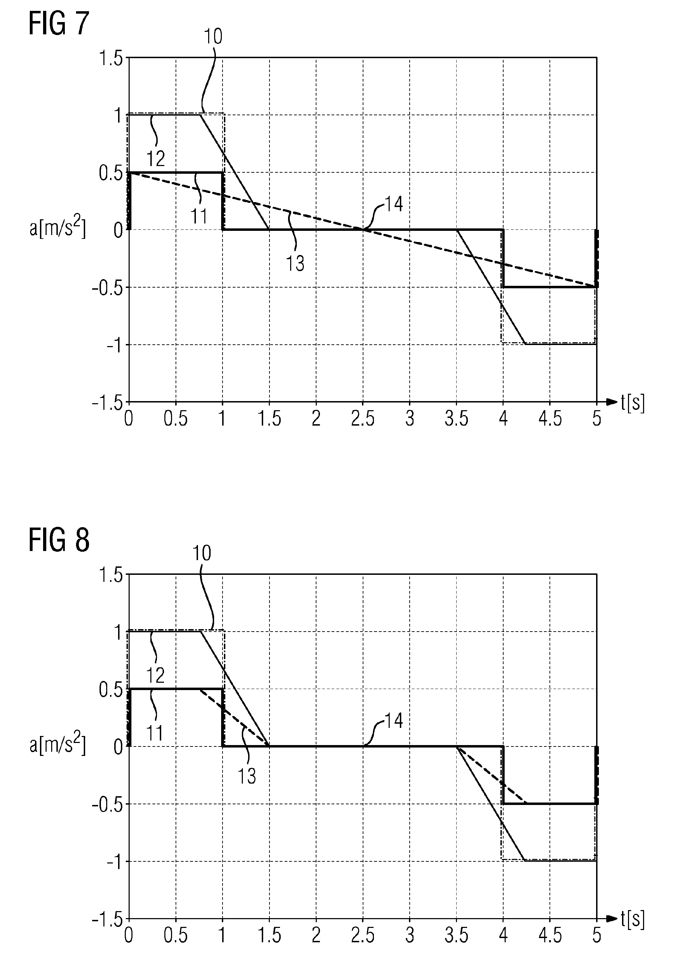

Energetisch besser sind jedoch die optimierten Beschleunigungsprofile 12 und 13 von FIG 5, da sie nicht nur stetig bzw. kontinuierlich wie in FIG 4 sind, sondern jeweils auch auf einer Geraden liegen. Die Anfangs- und Endzeitpunkte der Bewegungsprofile werden wiederum auch hier nicht betrachtet. In den Beispielen von FIG 6 und FIG 7 liegt zusätzlich eine mechanische Grenze vor, die eine Maximalbeschleunigung = 1m/s$^2$ erzwingt. Daher ist in FIG 6 der Beschleunigungswert des jeweils optimierten Profils 12, 13 auf denjenigen des zugehörigen klassischen Profils 10, 11 begrenzt. Damit sind wiederum X-Achse und Y-Achse synchron skaliert und es liegt kein Konturfehler vor.

In dem Beispiel von FIG 7 ist die Verlustenergie der Y-Achse minimal, da das Profil auf eine Gerade gezwungen wurde. X-Achse und Y-Achse sind also nicht synchron skaliert und es folgt ein Konturfehler. Dieser Konturfehler kann auf das erlaubte bzw. gewünschte Maß reduziert werden, indem das Beschleunigungsprofil 13 der Y-Achse dem Profil 13 von FIG 6 angenähert wird. Dabei nähern sich jedoch auch die thermischen Verluste der Y-Achse denen vom Beispiel von FIG 6 an. Es gilt also entsprechend den Anforderungen ein Optimum zwischen Konturfehler und möglichst geringer Verlustenergie zu finden und dementsprechend das Beschleunigungsprofil anzupassen.

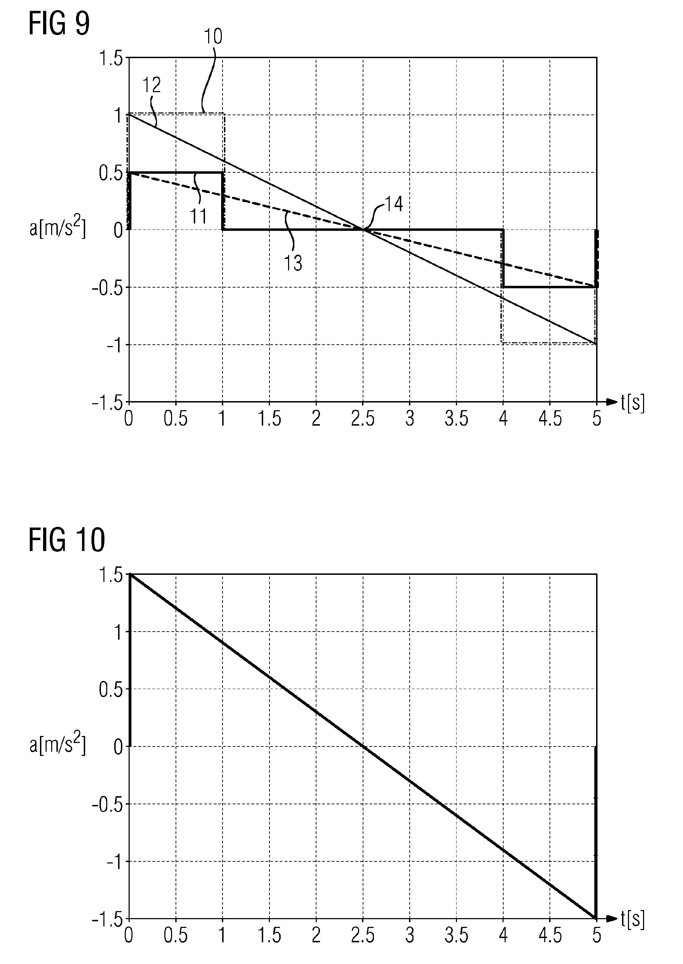

Die Beispiele der FIG 8 und 9 zeigen, dass sich unter Umständen gleiche oder ähnliche Beschleunigungsprofile auch bei anderen Randbedingungen ergeben können. So entsprechen die Profile 10 bis 13 von FIG 8 denjenigen von FIG 6. Randbedingung in FIG 8 ist jedoch, dass die Beschleunigung auf der Bewegungsbahn, d. h. diejenige Beschleunigung, die für das Maschinenelement bzw. die Maschine aus der Beschleunigung der X-Achse und der Beschleunigung der Y-Achse resultiert, begrenzt ist oder eine ähnliche technologische Grenze wirkt. Die jeweiligen Achsbeschleunigungen sind jedoch nicht an der jeweils zugehörigen mechanischen oder thermischen Grenze, d. h. $a_{max}$>1m/s$^2$.

In dem Beispiel von FIG 9 erfolgt eine weitere Energieoptimierung und zwar nicht nur im Hinblick auf das Beschleunigungsprofil 13 der Y-Achse wie in FIG 7, sondern zusätzlich auch eine Verlustenergieminimierung bezüglich der X-Achse, indem das Beschleunigungsprofil 12 ebenfalls auf eine Gerade gelegt wird.

Die Energieoptimierung der Bewegungsbahn des Zweiachsenverbunds kann durch die Beschleunigungsprofiltypen gemäß den FIG 10 bis 13 erreicht werden, die alle stetig sind, d. h. kontinuierliche Übergänge zwischen den Beschleunigungswerten besitzen. Die Profiltypen müssen nicht für beide Achsen gleich gewählt werden, sondern wie in den obigen Beispielen gezeigt, können sie auch für beide Achsen verschieden sein. Die minimale Verlustenergie ergibt sich bei dem Profiltyp gemäß FIG 10, wo das Geschwindigkeitsprofil auf einer Geraden durch den Mittelpunkt 14 verläuft (die Endpunkte der Profile wieder außer Acht gelassen).

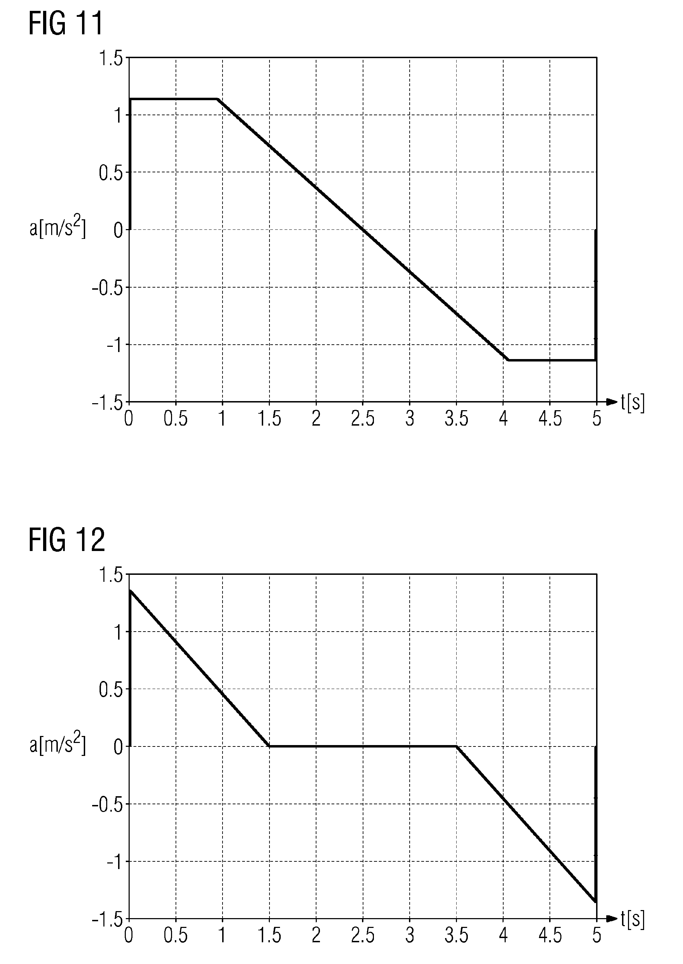

Falls eine Beschleunigungsgrenze einzuhalten ist, ergibt sich der Profiltyp von FIG 11, wo gegenüber dem Profiltyp von FIG 10 die maximalen Beschleunigungen sowohl beim Beschleunigen als auch beim Abbremsen begrenzt sind.

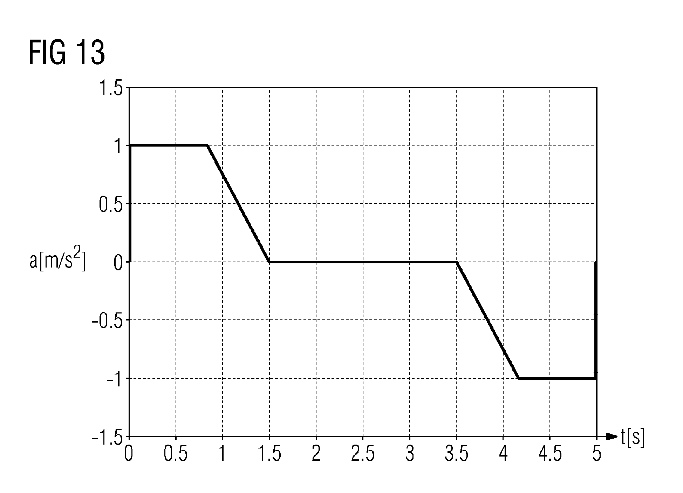

Ist eine Geschwindigkeitsgrenze einzuhalten, so ist die Beschleunigung zwischenzeitlich auf null zu reduzieren, was der Profiltyp von FIG 12 wiedergibt. Falls darüber hinaus auch noch eine Beschleunigungsgrenze einzuhalten ist, führt dies zu dem Profiltyp von FIG 13, dessen maximaler Beschleunigungsbetrag hier auf 1m/s2 begrenzt ist. Jeder der Profiltypen besitzt jedoch einen stetigen bzw. kontinuierlichen Verlauf wie auch die optimierten Beschleunigungsprofile 12 und 13 in den FIG 2 bis 9. Ein solcher kontinuierlicher Verlauf führt zu einer Reduzierung der Verlustenergie und im Fall eines linearen Verlaufs über die gesamte Zeitspanne zu einem Minimum der Verlustenergie.

**Patentansprüche**

1. Verfahren zum Betrieb eines technischen Systems, das mindestens eine erste und eine zweite, jeweils steuerbare oder regelbare elektrische Achse aufweist, durch

   - Ausführen einer ersten Bewegung durch die erste Achse,
   - Ausführen einer mit der ersten Bewegung verknüpften zweiten Bewegung durch die zweite Achse, wobei
   - die erste Bewegung und die zweite Bewegung beide zu einem gemeinsamen ersten Zeitpunkt beginnen und zu einem gemeinsamen zweiten Zeitpunkt enden, und
   - Festlegen einer Zeitspanne zwischen dem ersten und dem zweiten Zeitpunkt,
   **dadurch gekennzeichnet, dass**
   - ein jeweiliges Beschleunigungsprofil (12, 13) der ersten und/oder der zweiten Bewegung innerhalb der Zeitspanne mindestens einen kontinuierlichen Übergang von einem Beschleunigungswert zu einem anderen Beschleunigungswert besitzt.

2. Verfahren nach Anspruch 1, wobei das Festlegen der Zeitspanne dadurch erfolgt, dass die erste Achse bei der ersten Bewegung zumindest zeitweise eine durch das technische System konstruktionsbedingte vorgegebene Maximalgeschwindigkeit erreicht.

3. Verfahren nach Anspruch 2, wobei die Zeitspanne für eine vorgegebene Distanz der ersten Bewegung für die erste Achse minimal ist.

4. Verfahren nach einem der vorhergehenden Ansprüche, wobei ein Bewegungsprofil der zweiten Achse bezüglich eines Parameters optimiert wird.

5. Verfahren nach einem der vorhergehenden Ansprüche, wobei das jeweilige Beschleunigungsprofil (12, 13) durch eine vorgegebene positive Maximalbeschleunigung und/oder eine vorgegebene negative Maximalbeschleunigung begrenzt ist.

6. Verfahren nach einem der vorhergehenden Ansprüche, wobei das jeweilige Beschleunigungsprofil für einen Zeitabschnitt, der größer als die kleinste zeitliche Auflösung des technischen Systems bei jeder Bewegung der Achsen ist, den Wert 0 aufweist.

7. Verfahren nach einem der vorhergehenden Ansprüche, wobei das jeweilige Beschleunigungsprofil (12, 13) über der gesamten Zeitspanne kontinuierlich verläuft.

8. Verfahren nach einem der vorhergehenden Ansprüche, wobei das jeweilige Beschleunigungsprofil (12, 13) über die gesamte Zeitspanne die gleiche Steigung besitzt.

9. Verfahren nach einem der vorhergehenden Ansprüche, wobei das Beschleunigungsprofil (13) der zweiten Achse zu einem Zeitpunkt kontinuierlich verläuft, an dem das Beschleunigungsprofil (12) der ersten Achse einen Sprung macht.

10. Verfahren nach einem der vorhergehenden Ansprüche, wobei das Beschleunigungsprofil (12) der ersten Achse durch Multiplikation mit einem einzigen Skalar in das Beschleunigungsprofil (13) der zweiten Achse überführbar ist.

**11.** Technischen Systems mit

- einer steuerbaren oder regelbaren elektrischen ersten Achse,
- mindestens einer steuerbaren oder regelbaren elektrischen zweiten, Achse,
- einer Steuereinrichtung, die zum Ansteuern der ersten Achse für ein Ausführen einer ersten Bewegung und zum Ansteuern der zweiten Achse für ein Ausführen einer mit der ersten Bewegung verknüpften zweiten Bewegung ausgebildet ist, wobei
- die erste Bewegung und die zweite Bewegung beide zu einem gemeinsamen ersten Zeitpunkt beginnen und zu einem gemeinsamen zweiten Zeitpunkt enden, und
- eine Zeitspanne zwischen dem ersten und dem zweiten Zeitpunkt festgelegt ist,
**dadurch gekennzeichnet, dass**
- in der Steuereinrichtung ein jeweiliges Beschleunigungsprofil (12, 13) für die erste und/oder die zweite Bewegung hinterlegt ist, das innerhalb der Zeitspanne mindestens einen kontinuierlichen Übergang von einem Beschleunigungswert zu einem anderen Beschleunigungswert besitzt.


**Geänderte Patentansprüche gemäss Regel 137(2) EPÜ.**

**1.** Verfahren zum Betrieb eines technischen Systems, das mindestens eine erste und eine zweite, jeweils steuerbare oder regelbare elektrische Achse aufweist, durch

- Ausführen einer ersten Bewegung durch die erste Achse,
- Ausführen einer mit der ersten Bewegung verknüpften zweiten Bewegung durch die zweite Achse, wobei
- die erste Bewegung und die zweite Bewegung beide zu einem gemeinsamen ersten Zeitpunkt beginnen und zu einem gemeinsamen zweiten Zeitpunkt enden, und
- Festlegen einer Zeitspanne zwischen dem ersten und dem zweiten Zeitpunkt, wobei
- ein jeweiliges Beschleunigungsprofil (12, 13) der ersten und/oder der zweiten Bewegung innerhalb der Zeitspanne mindestens einen kontinuierlichen Übergang von einem Beschleunigungswert zu einem anderen Beschleunigungswert besitzt, wobei
- das Festlegen der Zeitspanne dadurch erfolgt, dass die erste Achse bei der ersten Bewegung zumindest zeitweise eine durch das technische System konstruktionsbedingte vorgegebene Maximalgeschwindigkeit erreicht, und wobei
- das Beschleunigungsprofil (13) der zweiten Bewegung über die gesamte Zeitspanne die gleiche Steigung besitzt.

**2.** Verfahren nach Anspruch 1, wobei die Zeitspanne für eine vorgegebene Distanz der ersten Bewegung für die erste Achse minimal ist.

**3.** Verfahren nach einem der vorhergehenden Ansprüche, wobei ein Bewegungsprofil der zweiten Achse bezüglich eines Parameters optimiert wird.

**4.** Verfahren nach einem der vorhergehenden Ansprüche, wobei das jeweilige Beschleunigungsprofil (12, 13) durch eine vorgegebene positive Maximalbeschleunigung und/oder eine vorgegebene negative Maximalbeschleunigung begrenzt ist.

**5.** Verfahren nach einem der vorhergehenden Ansprüche, wobei das jeweilige Beschleunigungsprofil (12, 13) über der gesamten Zeitspanne kontinuierlich verläuft.

**6.** Verfahren nach einem der vorhergehenden Ansprüche, wobei das Beschleunigungsprofil (13) der zweiten Achse zu einem Zeitpunkt kontinuierlich verläuft, an dem das Beschleunigungsprofil (12) der ersten Achse einen Sprung macht.

**7.** Verfahren nach einem der vorhergehenden Ansprüche, wobei das Beschleunigungsprofil (12) der ersten Achse durch Multiplikation mit einem einzigen Skalar in das Beschleunigungsprofil (13) der zweiten Achse überführbar ist.

**8.** Technischen Systems mit

- einer steuerbaren oder regelbaren elektrischen ersten Achse,

- mindestens einer steuerbaren oder regelbaren elektrischen zweiten, Achse,
- einer Steuereinrichtung, die zum Ansteuern der ersten Achse für ein Ausführen einer ersten Bewegung und zum Ansteuern der zweiten Achse für ein Ausführen einer mit der ersten Bewegung verknüpften zweiten Bewegung ausgebildet ist, wobei
- die erste Bewegung und die zweite Bewegung beide zu einem gemeinsamen ersten Zeitpunkt beginnen und zu einem gemeinsamen zweiten Zeitpunkt enden, und
- eine Zeitspanne zwischen dem ersten und dem zweiten Zeitpunkt festgelegt ist, wobei
- in der Steuereinrichtung ein jeweiliges Beschleunigungsprofil (12, 13) für die erste und/oder die zweite Bewegung hinterlegt ist, das innerhalb der Zeitspanne mindestens einen kontinuierlichen Übergang von einem Beschleunigungswert zu einem anderen Beschleunigungswert besitzt, wobei
- die Zeitspanne so festgelegt ist, dass die erste Achse bei der ersten Bewegung zumindest zeitweise eine durch das technische System konstruktionsbedingte vorgegebene Maximalgeschwindigkeit erreicht, und wobei
- das Beschleunigungsprofil (13) der zweiten Bewegung über die gesamte Zeitspanne die gleiche Steigung besitzt.

FIG 1

FIG 2

FIG 3

FIG 4

FIG 5

FIG 6

FIG 7

FIG 8

FIG 9

FIG 10

FIG 11

FIG 12

FIG 13

Europäisches
Patentamt

European
Patent Office

Office européen
des brevets

**EUROPÄISCHER RECHERCHENBERICHT**

Nummer der Anmeldung

EP 14 17 0881

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 315 093 A1 (KUKA LAB GMBH [DE]) 27. April 2011 (2011-04-27) * Absatz [0005] - Absatz [0033] * ----- | 1-11 | INV. G05B19/416 B25J9/16 |
| Y | EP 2 135 143 A1 (SIEMENS AG [DE]) 23. Dezember 2009 (2009-12-23) * Absatz [0013] - Absatz [0021] * * Absatz [0025] - Absatz [0050] * ----- | 1-11 | |
| Y | DE 10 2010 013525 A1 (WEIS GMBH SONDERMASCHINENTECHNIK [DE]) 14. Juli 2011 (2011-07-14) * Absatz [0005] - Absatz [0034] * ----- | 1-11 | |
| Y | DE 10 2010 013526 A1 (WEIS GMBH SONDERMASCHINENTECHNIK [DE]) 6. Oktober 2011 (2011-10-06) * Absatz [0005] - Absatz [0021] * ----- | 1-11 | |
| Y | EP 2 620 824 A1 (BOSCH GMBH ROBERT [DE]) 31. Juli 2013 (2013-07-31) * Absatz [0011] - Absatz [0023] * ----- | 1-11 | RECHERCHIERTE SACHGEBIETE (IPC) G05B B25J |

Der vorliegende Recherchenbericht wurde für alle Patentansprüche erstellt

| Recherchenort | Abschlußdatum der Recherche | Prüfer |
|---|---|---|
| Den Haag | 12. November 2014 | Patsiopoulos, N |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 0881

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2014

| Im Recherchenbericht angeführtes Patentdokument | Datum der Veröffentlichung | Mitglied(er) der Patentfamilie | Datum der Veröffentlichung |
|---|---|---|---|
| EP 2315093 A1 | 27-04-2011 | CN 102039596 A<br>DE 102009049172 A1<br>EP 2315093 A1<br>KR 20110040703 A<br>US 2011087375 A1 | 04-05-2011<br>16-06-2011<br>27-04-2011<br>20-04-2011<br>14-04-2011 |
| EP 2135143 A1 | 23-12-2009 | AT 496325 T<br>EP 2135143 A1<br>WO 2008125656 A1 | 15-02-2011<br>23-12-2009<br>23-10-2008 |
| DE 102010013525 A1 | 14-07-2011 | KEINE | |
| DE 102010013526 A1 | 06-10-2011 | DE 102010013526 A1<br>EP 2539784 A2<br>WO 2011120685 A2 | 06-10-2011<br>02-01-2013<br>06-10-2011 |
| EP 2620824 A1 | 31-07-2013 | EP 2620824 A1<br>WO 2013110299 A1 | 31-07-2013<br>01-08-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 201314337 A